# EUROPEAN PATENT APPLICATION

(11) **EP 2 889 853 A1**
(43) Date of publication of application: **01.07.2015**
(21) Application number: 13199673.8
(22) Date of filing: 27.12.2013
(51) Int. Cl.: G09B 19/00, A63B 24/00

(54) **A method for optimizing running performance for an individual**

(71) Applicant: Alta CPH A/S, 2300 Kobenhavn S (DK)
(72) Inventor: Barfred, Stefan, 2700 Brønshøj (DK); Larsen, Tony, 211 13 Malmö (SE)
(74) Representative: Inspicos A/S

(57) **Abstract**

A method for optimizing running performance for an individual is disclosed. Movements of a foot are monitored using one or more accelerometers. The data is transmitted to a portable electronic processing device, e.g. in the form of a cellular phone, where the data is processed to derive a movement pattern of the foot. Based on a comparison of the derived movement pattern and an optimal movement pattern, the portable electronic processing device provides feedback to the individual in order to adjust the movement pattern of the foot of the individual, thereby improving a running performance. Thereby the risk of injuries and overload of muscles, joints and tendons can be reduced.

## Description

### FIELD OF THE INVENTION

The present invention relates to a method for optimizing running performance of an individual, e.g. with respect to allowing the individual to spend energy in an efficient manner, and/or with respect to avoiding injuries, such as nagging injuries, or undesired loads on joints, muscles or tendon.

### BACKGROUND OF THE INVENTION

It is widespread to exercise by running, e.g. by cross country running or jogging. In order to ensure that a runner gains the most of his or her training, it is important that the runner runs in a correct manner, e.g. in terms of how a stride is performed and the pose of the torso. The running form of a runner may, e.g., be tested by letting the runner run on a treadmill while wearing suitable sensors coupled to stationary data gathering and processing equipment. Based on such a test, general advice regarding running form may be provided to the runner. However, it is not possible to check whether or not the runner sticks to the general advice, once the runner is doing actual training at a later point in time.

EP 2 025 368 A2 discloses a sports training system comprising at least one monitor and a portable electronic processing device for receiving data from the at least one monitor and providing feedback to an individual based on the received data. Thereby the performance of the individual can be improved. The sports training system of EP 2 025 368 A2 does not provide feedback to the individual which allows the individual to improve his or her running style in order to minimize the risk of injury or spending energy in an efficient manner.

### DESCRIPTION OF THE INVENTION

It is an object of embodiments of the invention to provide a method for optimizing running performance which allows an individual to, on the fly, adjust his or her running style in order to minimize the risk of injuries.

It is a further object of embodiments of the invention to provide a method for optimizing running performance which allows an individual to, on the fly, adjust his or her running style in order to optimize energy consumption.

The invention provides a method for optimizing running performance for an individual, the method comprising the steps of:
- monitoring movements of a foot of the individual during running, using one or more accelerometers,
- transmitting data obtained during the monitoring step from the one or more accelerometers to a portable electronic processing device,
- the portable electronic processing device deriving a three-dimensional movement pattern of the foot of the individual, based on the data obtained during the monitoring step,
- the portable electronic processing device comparing the derived movement pattern of the foot of the individual to an optimal movement pattern, and
- the portable electronic processing device providing feedback to the individual, based on the comparing step, and in order to adjust the movement pattern of the foot of the individual, thereby improving a running performance.

In the present context the term 'individual' should be interpreted to mean a human being who is performing exercise by running.

According to the method of the invention, movements of a foot of the individual are initially monitored, while the individual is running. This is done by means of one or more accelerometers, preferably arranged at or near the foot of the individual, such as attached to the a shoe, in the sole of a shoe, in a sock or directly mounted on the foot of the individual. The accelerometers, thus, measure accelerations of the foot as a function of time.

Next, the data obtained by the accelerometers is transmitted to a portable electronic processing device. The portable electronic processing device is preferably carried by the individual, thereby allowing the data to be transmitted on the fly and while the individual is running. The transmission may be performed wirelessly, e.g. using a WiFi signal, a Bluetooth signal, or any other suitable kind of wireless signal. As an alternative, the portable electronic processing device may be hardwired to the accelerometers, and the transmission may take place via the hardwired connection. The transmission may be performed continuously, or data may be transmitted in batches at predefined time intervals.

Next, the portable electronic processing device derives a three-dimensional movement pattern of the foot of the individual, based on the data obtained during the monitoring step, i.e. based on the data relating to the acceleration of the foot. Accordingly, this step results in a three-dimensional pattern which reflects how the foot moves, e.g. during a stride. In particular, the three-dimensional pattern reflects accelerations, and thereby forces, acting on the foot as the foot moves while the individual runs, e.g. in the course of a stride.

Then the electronic processing device compares the derived movement pattern of the foot of the individual to an optimal movement pattern. The optimal movement pattern may, e.g., be a pattern which is known to provide an optimal utilization of the energy spent by the individual and/or which minimizes the risk of injuries, such as nagging injuries or undesired loads on muscles, joints or tendons. The optimal pattern may be a universal pattern, or it may be an individual pattern, which is optimized with respect to characteristics and/or previous performance of the individual.

Thus, the comparison reveals to which extent the derived movement pattern of the foot of the individual follows the optimal movement pattern, and thereby whether or not the individual runs in an optimal manner. Furthermore, in the case that the derived movement pattern differs from the optimal movement pattern, the comparison may further reveal in which manner the derived movement pattern differs from the optimal movement pattern, and thereby what the individual should change in order to improve the movement pattern, i.e. to adjust the movement pattern in the direction of the optimal movement pattern.

Finally, the portable electronic processing device provides feedback to the individual, based on the comparing step. The feedback is of a kind which seeks to adjust the movement pattern of the foot of the individual in such a manner that the running performance of the individual is improved. Since the feedback is provided while the individual is running, the individual is allowed to adjust the running style during the training pass. This is much more efficient than providing feedback when the individual has completed a training pass, and expecting the individual to remember the feedback when performing the next training pass.

Since the feedback is based on the comparing step, it is based on how much and in which way the derived movement pattern of the foot differs from the optimal movement pattern. Thus, the provided feedback preferably informs the individual in which manner the individual should change his or her running style in order to obtain a movement pattern of the foot which is identical to, or at least more similar to, the optimal movement pattern.

When the three-dimensional movement pattern of the foot is derived, the portable electronic processing device may use further information, which is not obtained by means of the one or more accelerometers. For instance, the portable electronic processing device may itself be capable of obtaining information, such as a position of the individual (in the case that the portable electronic processing device comprises a GPS module), time, distance, running velocity, altitude, etc. Furthermore, personal information relating to the individual may initially be provided to the portable electronic processing device. Such information may, e.g., include gender, age, maximum pulse, height, length of legs, weight, etc.

The steps of monitoring movements, transmitting data, deriving a movement pattern, comparing the derived movement pattern to an optimal movement pattern, and providing feedback may be performed in real time. According to this embodiment, the actual movement pattern of the foot of the individual is continuously monitored and compared to the optimal movement pattern, and feedback is repeatedly provided to the individual during the entire training pass. Thus, the feedback is given on the fly, and if the running style of the individual changes during a training pass, e.g. because the individual gets tired, this can be detected, and the individual is encouraged, via the feedback, to restore a running style which provides an optimal movement pattern of the foot.

The step of providing feedback may comprise providing audible feedback. According to this embodiment, the feedback may advantageously be provided via earphones coupled to the portable electronic processing device. Alternatively or additionally, the step of providing feedback may comprise providing visual feedback, or any other suitable kind of feedback, which the individual is capable of perceiving.

The portable electronic processing device may be a cellular phone, such as a smartphone. As an alternative, the portable electronic processing device may be a watch, a heart rate monitor, an audio player, or any other suitable kind of portable device, which is capable of performing electronic processing of measurement data, and of providing a feedback. In the case that the portable electronic processing device is a cellular phone, a watch or another kind of device having a display, the feedback may include written statements, or illustrative diagrams or pictograms provided via the display.

The method may further comprise the steps of:
- monitoring movements of the chest of the individual, using one or more accelerometers arranged at the chest of the individual,
- transmitting data obtained during the monitoring step from the one or more accelerometers to the portable electronic processing device, and
- the portable electronic processing device calculating an instantaneous power spent to propel the individual's body, based on the transmitted data,
wherein the step of the portable electronic processing device providing feedback to the individual is further based on the calculated instantaneous power.

According to this embodiment, the individual is provided with one or more further accelerometers. The further accelerometers are arranged at the chest of the individual, and thereby accelerations of the chest of the individual are monitored while the individual is running.

Similarly to the data relating to the movements of the foot, the data relating to the movements of the chest is transmitted to the portable electronic processing device, and the portable electronic processing device processes the received data. Thereby the portable electronic processing device calculates an instantaneous power spent to propel the individual's body, based on the transmitted data. The feedback provided to the individual is further based on the calculated instantaneous power.

Thus, according to this embodiment, a measure is obtained for the power which the individual is currently spending in propelling the body of the individual. This measure indicates whether or not the individual is spending energy in an efficient manner. Therefore, providing feedback based on the calculated instantaneous power may advantageously include providing feedback in order to improve the efficiency of the energy consumption of the individual.

A measurement of power spent to propel the body of an individual is sometimes referred to as a 'Watt measurement'.

The method may further comprise the steps of:
- calculating an average power spent to propel the individual's body over a predefined time interval, and
- deriving a running efficiency indicator, based on the calculated average power, and on a running velocity of the individual,
wherein the step of the portable electronic processing device providing feedback to the individual is further based on the derived running efficiency indicator. According to this embodiment, the individual is encouraged to run in a more energy efficient manner, i.e. in a manner which minimizes the average power spent to propel the individual's body at a given running velocity.

According to an embodiment, the method may be performed in the following manner. A reference power, or reference wattage, for the individual runner may be provided, in order to attempt to provide an absolute calibrated power estimation. One or more sensors, in the form or accelerometer(s), is/are mounted on the torso of the runner, close to the centre of gravity of the torso. The accelerometer(s) provide(s) a three-dimensional acceleration vector, representing a three-dimensional acceleration pattern of the torso. The three-dimensional accelerometer output is conditioned in order to remove DC components of the signal. Such DC components are normally due to gravity. Subsequently, the output is transformed to provide a resulting space acceleration vector for the torso acceleration. The torso acceleration is then multiplied by the body mass of the individual, in order to obtain the force which moves the torso. A dynamics torso velocity is obtained by integrating the torso acceleration with respect to time. This may, e.g., be done using a low pass filter, such as a first order low pass filter. The product of the force and the torso velocity results in the instantaneous power that is spent for propelling the individual's body forwards. Averaging the power over predefined time intervals provides a stable measure for power spent. Comparing this measure for the power spent to the running velocity provides a running efficiency indicator.

The step of deriving a movement pattern of the foot may comprise deriving points of impact and/or duration of impact on the foot between the foot and the ground during an impact phase of a stride.

A stride is sometimes divided into a number of phases, such as an impact phase where the foot contacts the ground, and a swing phase where the foot is moved above the ground. During the impact phase it is important how the foot is moved, since the loads on muscles, joints and tendons tend to be significant during this phase. Therefore, moving the foot in an incorrect manner, or in a less than optimal manner, during the impact phase may very well result in overload or undesired loads, and thereby the risk of injuries is increased.

It is therefore an advantage to monitor points of impact between the foot and the ground, and to monitor duration of impact between the foot and the ground. For instance, a first accelerometer may detect the impact between the heel and the ground, as well as the duration of this impact. A second accelerometer may detect the impact between the mid foot and the ground, as well as the duration of this impact. A third accelerometer may detect the impact between the front foot and the ground, as well as the duration of this impact. Based on these measurements, a movement pattern of the foot, during the impact phase, can be derived. The movement pattern may include exactly where on the foot the impacts between the heel, the mid foot and the front foot occur, and the respective durations of each of these impacts. Thus, a quality of the impact phase can be measured, based on the measured accelerations, and, e.g., based on an angle between the foot and the ground at the initial impact between the heel and the ground (dorsal flexion and/or plantar flexion of the foot), and/or based on whether the impact takes place along an outer side or an inner side of the foot, and/or based on rotational or torsional movements of the back part of the foot (pronation or supination), and/or based on sideways movements of the heel (calcaneus inversion or eversion), and/or based on acceleration and/or angle between the foot and the ground during termination of the impact phase.

As an alternative, a single three-dimensional accelerometer, e.g. mounted on the foot, may provide the data described above.

In particular, the accelerometers may provide information regarding the speed, position and impact time of the foot, during the impact phase as well as during the swing phase.

The information listed above is valuable with respect to evaluating the risk of injuries or undesired loads on muscles, joints and tendons, due to an inappropriate running style. It is also valuable with respect to evaluating whether or not the energy spent by the individual is spent in an efficient manner.

Thus, based on the comparison between the derived movement pattern and the optimal movement pattern, the feedback to the individual could, e.g., be of the form: "Reduce the length of your stride"; "Lean forwards"; "Move impact further towards front foot"; "Move impact further towards mid foot", etc.

The step of deriving a movement pattern of the foot may comprise deriving vertical and horizontal position of the foot during a swing phase of a stride. This allows, e.g., the lifting of the leg, including hip flexion at forward movement, and the angle of the foot (dorsal flexion) during the terminal part of the swing phase to be evaluated.

Alternatively or additionally, the following information may be obtained during the swing phase: Acceleration and/or sideways movements of the foot (and thereby the lower part of the leg) during the initial part of the swing phase. This provides information regarding 'heel kick', differences between movements of the left and right leg at maximum extension of the hip and flexion of the knee. Acceleration and subsequent deceleration of the foot during the swing phase. This provides information regarding force changes, and thereby stress loads on the hip bender and the muscles at the back of the knee, as well as regarding the maximum movement of the leg, and thereby the extension or length of the leg.

Furthermore, the step of deriving a movement pattern may include obtaining information regarding stride length, stride frequency, duration of impact phase and/or duration of swing phase. For instance, a stride length may be derived on the basis of a stride count obtained from the data provided by the accelerometer(s) and a position and/or velocity obtained by means of a GPS module of the portable electronic processing device.

The step of deriving a movement pattern of the foot may comprise deriving a pose angle of a torso of the individual. The pose angle of the torso is important with respect to the stride length and the energy consumption during a stride. Adjusting the pose angle of the torso may therefore result in a more efficient energy consumption.

The method may further comprise the step of the portable electronic processing device transmitting processed data to a central database. According to this embodiment, data originating from a plurality of training passes, possibly performed by a plurality of individuals, is gathered in the central database. This allows the data to be more thoroughly processed after a training pass has been completed. It further allows data originating from one training pass to be compared to data originating from other training passes performed by the individual, and possibly to training passes performed by other individuals. This may be used for defining 'optimal movement patterns' and/or for adjusting existing 'optimal movement patterns'. Thereby the system can be improved over time in the sense that the 'optimal movement pattern' which the derived movement pattern is compared to, is continuously improved to reflect a running style which is truly optimal, based on actual measurements performed on actual runners performing actual training passes. The improved optimal movement patterns may, e.g., be obtained by means of artificial intelligence (AI), e.g. using pattern recognition and classification of running styles.

The database may further comprise data obtained in a research laboratory. This will allow more data to be measured than will be practical during a real training pass, and thereby additional knowledge regarding the running style of a given individual can be obtained.

The step of comparing may comprise comparing the derived movement pattern to a movement pattern derived previously during the same training pass, thereby obtaining a measure for a change in the movement pattern as a function of time, and wherein the step of providing feedback comprises generating a warning when changes in the movement pattern exceeds a predefined threshold.

According to this embodiment, the running style of the individual is monitored during the course of a training pass. It is normally easier to maintain a correct running style at the beginning of a training pass, where one is not tired. As the training pass proceeds, the individual grows tired and possibly less concentrated. Thereby it becomes increasingly difficult to run in a correct manner, and the risk of injuries and/or less efficient energy consumption is increased. It is therefore an advantage to monitor the running style of the individual, in order to detect when changes in the running style occur, and to provide feedback to the individual which encourages him or her to maintain an optimal or a correct running style during the entire training pass.

For instance, the comparison may reveal that the stride frequency is increasing or decreasing. In this case the feedback to the individual could, e.g., be: "Your stride frequency is increasing/decreasing, please decrease/increase the stride frequency". Or the feedback could simply be an alarm indicating that the stride frequency is changing. As another example, the comparison may reveal that the point of impact between the foot and the ground is moving backwards towards the heel. In this case the feedback to the individual could, e.g., be: "Your impact is moving backwards, please ensure landing further towards the mid foot".

The method may further comprise obtaining further data regarding the individual. Such data may, e.g., include running velocity of the individual and/or the heart rate of the individual. Such data may be used, along with the data obtained from the accelerometers, for calculating stride length and/or energy consumption per unit length the body of the individual is propelled forwards.

According to an embodiment, the method may be performed in the following manner. Data relating to three-dimensional accelerations of the foot of an individual is obtained by means of one or more accelerometers, e.g. a three-dimensional accelerometer, mounted at or near the foot of the individual. The data is transmitted to a portable electronic processing device, where it is conditioned for the removal of a DC component, which originates from the force of gravity acting on the foot. Then the conditioned data is transformed in order to provide a resulting space acceleration vector for the foot. The acceleration is multiplied by a dynamic mass of the foot and leg, thereby obtaining a foot impact force, representing the impact of the forces acting on the foot, except for the gravitational force. A foot impact history can be derived from the processed data, and based on the foot impact history information regarding maximum impact force on the foot, duration of impact between the foot and the ground, foot imprint characteristics, etc. can be derived. The result may be referred to as a 'Key Performance Index'.

### BRIEF DESCRIPTION OF THE DRAWINGS

The invention will now be described in further detail with reference to the accompanying drawings, in which
Fig. 1 is a block diagram illustrating a method according to a first embodiment of the invention,
Fig. 2 is a block diagram illustrating a method according to a second embodiment of the invention,
Fig. 3 is a front view of an individual carrying sensors for use in a method according to an embodiment of the invention,
Fig. 4 is a side view of the individual of Fig. 3,
Figs. 5 and 6 show a sensor arranged on a shoe,
Figs. 7-10 show examples of feedback provided to an individual, and
Fig. 11 shows measurements performed by a three-dimensional accelerometer as a function of time.

### DETAILED DESCRIPTION OF THE DRAWINGS

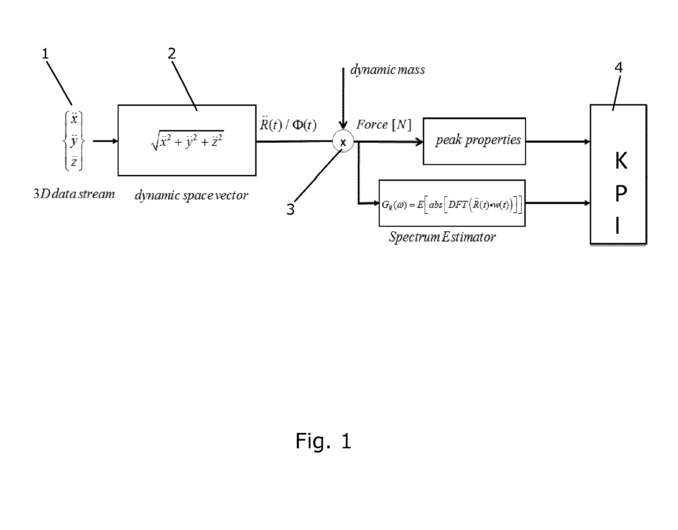

Fig. 1 is a block diagram illustrating a method according to a first embodiment of the invention. A data stream signal 1 is obtained from a three-dimensional accelerometer arranged on or near the foot of an individual. The data stream signal 1 is supplied to a conditioning unit 2, where a dynamic space vector is calculated, and the DC component of the signal is removed, the DC signal originating from gravity acting on the foot. Thereby the resulting space acceleration vector acting on the foot is obtained. The space acceleration vector is supplied to a multiplier 3, where it is multiplied by a dynamic mass of the foot and leg, thereby obtaining an impact force acting on the foot.

The foot impact force is analysed in order to obtain Key Performance indices 4, e.g. representing maximum impact force, ground contact duration, foot imprint characteristics, etc., for each stride. Based on this, a movement pattern of the foot can be derived. The derived movement pattern can be compared to an optimal movement pattern, and based on the comparison a feedback can be generated for the individual, in order to encourage the individual to run in an optimal manner.

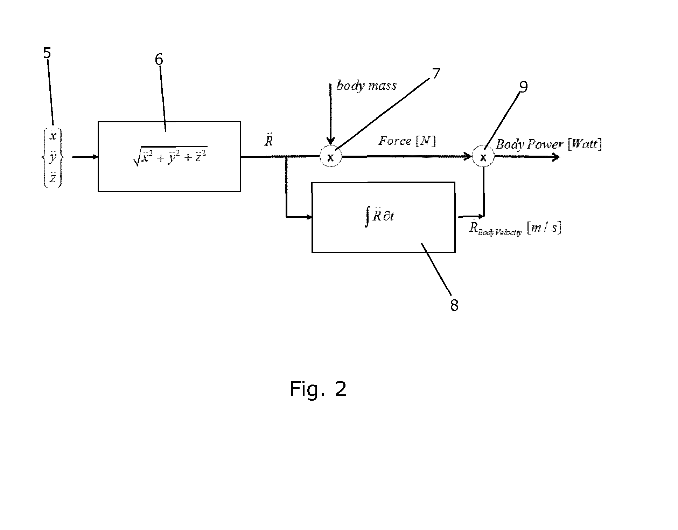

Fig. 2 is a block diagram illustrating a method according to a second embodiment of the invention. A data stream signal 5 is obtained from a three-dimensional accelerometer arranged at or near a torso of an individual. Preferably, the three-dimensional accelerometer is arranged at or near the centre of gravity of the torso. The data stream signal 5 is supplied to a conditioning unit 6, where a resulting space acceleration vector is calculated, representing a torso acceleration. Calculating the resulting space acceleration vector includes removing a DC signal originating from gravity acting on the individual. The resulting space acceleration vector is supplied to a multiplier 7, where it is multiplied by a mass of the body of the individual, thereby obtaining a force which causes the movement of the torso.

Simultaneously, the resulting space acceleration vector is supplied to an integrator 8, e.g. in the form of a first order low pass filter, where the resulting space acceleration vector is integrated, thereby obtaining a dynamic torso velocity.

The calculated force and the obtained dynamic torso velocity are supplied to a multiplier 9, where they are multiplied, thereby obtaining an instantaneous power, which the individual is spending in order to propel the body of the individual over the ground. Averaging the calculated instantaneous power over a predefined time interval, e.g. 10-20 seconds, provides a stable measure for power spent by the individual. This average power, compared to running velocity, provides a running efficiency indictor.

The running efficiency indicator may, e.g., be compared to a reference running efficiency. The reference running efficiency may be a universal reference, or it may be a reference which is specific for the individual. Based on the comparison, or simply based on the running efficiency indicator, a feedback can be generated for the individual, in order to encourage the individual to run in a more efficient manner.

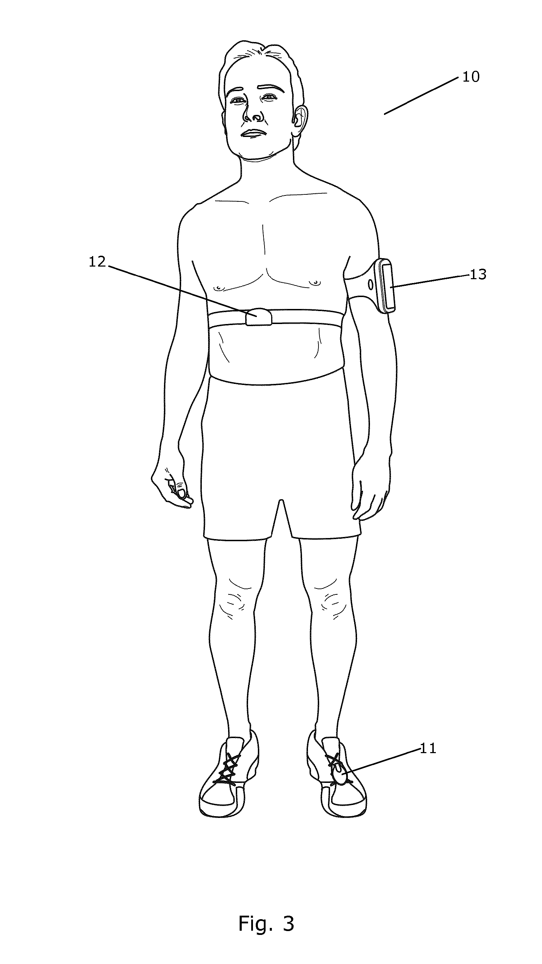

Fig. 3 is a front view of an individual 10 carrying sensors for use in a method according to an embodiment of the invention. The individual 10 carries a first sensor 11, mounted on a shoe worn by the individual 10, and a second sensor 12 arranged near a centre of gravity of the torso of the individual 10. The individual 10 further carries a portable electronic processing device in the form of a cellular phone 13 mounted on the arm of the individual 10.

The first sensor 11 and the second sensor 12 are both in the form of three-dimensional accelerometers. Thus, when the individual is running, the first sensor 11 measures three-dimensional accelerations of the foot of the individual 10. The first sensor 11 supplies the measured data to the cellular phone 13, and the cellular phone 13 processes the data, thereby deriving a movement pattern of the foot, e.g. identifying impact force and/or impact time between the foot and the ground during a stride. The derived movement pattern is compared to an optimal movement pattern. Based on the comparison, a feedback is provided to the individual 10, in order to encourage the individual to run in such a manner that the foot is moved in an optimal manner.

Simultaneously, the second sensor 12 measures three-dimensional accelerations of the torso of the individual 10. The second sensor 12 supplies the measured data to the cellular phone 13, and the cellular phone 13 processes the data in order to derive a measure for the instantaneous energy spent by the individual 10 for propelling the individual 10 forwards. Based on the derived instantaneous energy, a feedback is provided to the individual 10, in order to encourage the individual 10 to run in a more energy efficient manner.

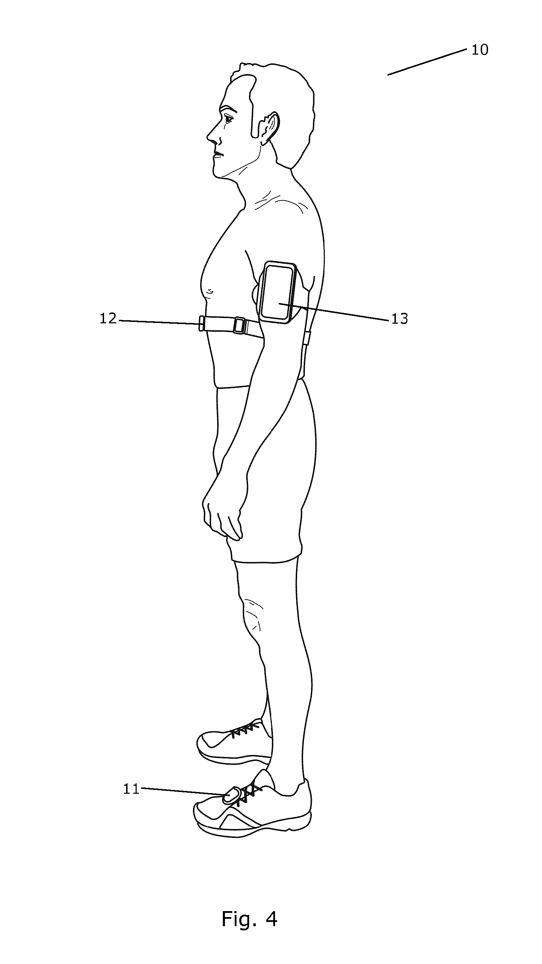

Fig. 4 is a side view of the individual of Fig. 3.

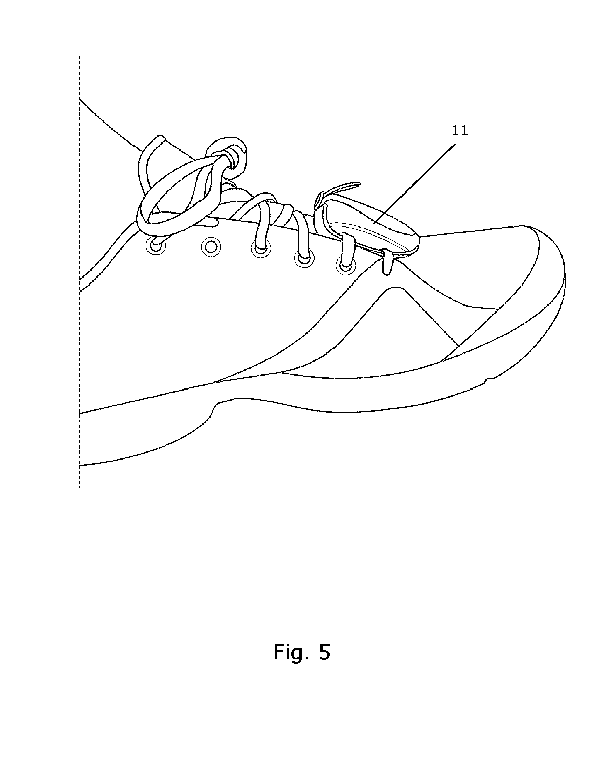

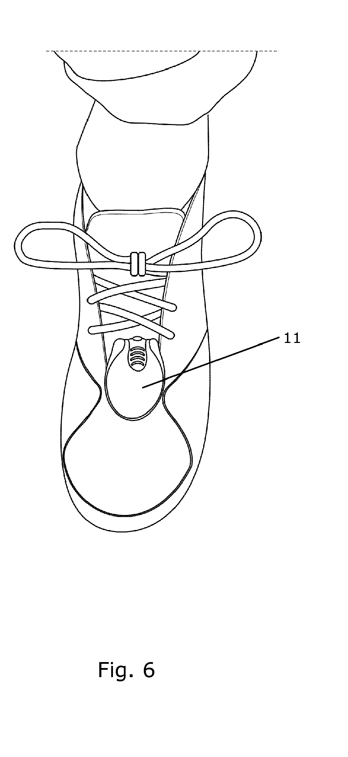

Figs. 5 and 6 show detailed views of the first sensor 11 shown in Figs. 3 and 4. It can be seen that the first sensor 11 is attached at a top surface of the shoe, via the shoelaces. Thereby the first sensor 11 closely follows the movements of the foot, when the individual is running, and the first sensor 11 is, accordingly, capable of accurately measuring three-dimensional accelerations of the foot.

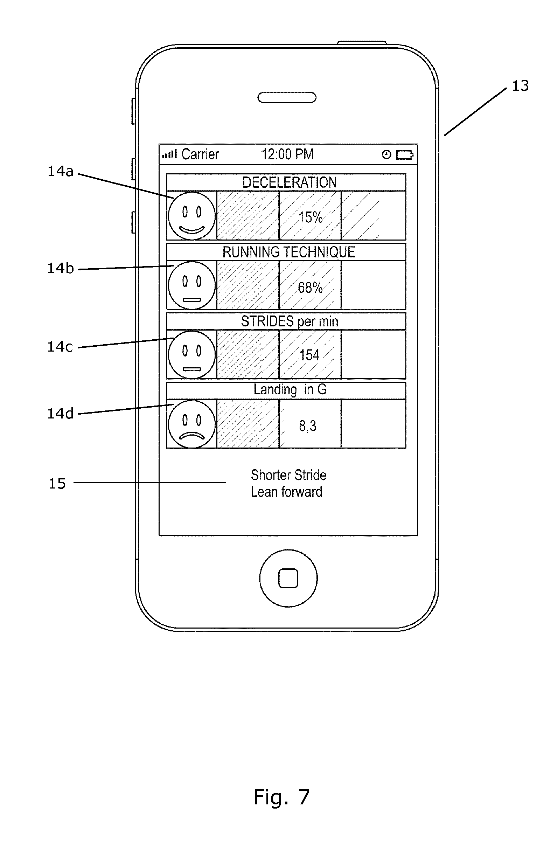

Fig. 7 is a front view of a cellular phone 13 for use in performing a method according to an embodiment of the invention. The cellular phone 13 has an app installed thereon, which allows the cellular phone 13 to process data received from sensors, such as the first 11 and second 12 sensors illustrated in Figs. 3-6, and to provide feedback to an individual, based on the processed data, in the manner described above.

In Fig. 7 feedback for the individual is displayed at a screen of the cellular phone 13, in the form of four score bars 14, each representing a parameter which influences the running style of the individual, and written feedback instructions 15.

Score bar 14a represents deceleration of the individual as a consequence of impact between the foot of the individual and the ground when the individual is running. The score bar 14a shows that the deceleration is approximately 15%, i.e. that the running velocity of the individual is decreased by 15% when an impact occurs between the foot of the individual and the ground. The higher the deceleration, the more energy is required in order to restore the previous running velocity. Accordingly, the deceleration is a measure for a part of the energy required in order to propel the body of the individual forwards. If the running style can be changed in a manner which reduces the deceleration, the energy consumption in order to run a specific distance at a specific velocity can be reduced.

A deceleration of 15% is relatively low, and accordingly, the individual may be instructed to run in a manner which slightly reduces the deceleration, or the feedback to the individual may be that the deceleration is fine, and that no adjustments in this regard are required.

Score bar 14b represents an overall running technique score of the individual. The running technique score may be calculated on the basis of various measured parameters, resulting in a derived movement pattern of the foot of the individual. The measured parameters may, e.g., include magnitude and/or position of an impact between the foot and the ground, duration of the impact, acceleration of the foot during the swing phase, etc. The derived movement pattern is compared to an optimal movement pattern, and the running technique score is derived on the basis of this comparison. The score bar 14b reveals that the running technique score is approximately 68%, i.e. that the running technique score is approximately 68% of the optimal running technique score. This indicates that the running technique is good, but improvements may be desired.

The optimal running technique score may be a personal goal, i.e. each individual may have his or her personal optimal running technique score, which is calculated or selected on the basis of specific and personal features or limits for the individuals. As an alternative, the optimal running technique score may be a universal score, which represents a perfect running style.

Score bar 14c represents stride frequency, in the form of a number of strides per minute performed by the individual while running. It is preferred that the stride frequency is higher than 180 strides per minute. Therefore 154 strides per minute is relatively low, and the individual should be instructed to increase the stride frequency.

Score bar 14d represents a G force applied to the foot of the individual during an impact between the foot and the ground. A high G force indicates that the foot is affected to a great extent during the impact, and that there is therefore a high risk of injuries or overload on muscles, joints or tendons. Score bar 14d indicates a low score, thereby indicating such a high G force.

Each of the score bars 14 includes a bar, which may advantageously be colour coded, and a smiley. This allows the individual to, at a glance, determine whether one or more of the parameters is far off and needs attention.

The written feedback 15 is in the form of a specific and concrete advice to the individual regarding how to change the running style in order to run in a more optimal manner, e.g. with respect to avoiding injuries or overload of muscles, joints and tendons, and/or with respect to spending energy in an optimal manner. In Fig. 7 the written feedback 15 is "shorter stride" and "lean forward". Thus, the app instructs the individual to take shorter strides, and to lean forwards. This will result in the individual taking off at a point of the foot which is closer to the front part of the foot. This will decrease the deceleration and increase the stride frequency. Thus, the written feedback 15 addresses the problems identified and described above with reference to the score bars 14a, 14b, 14c.

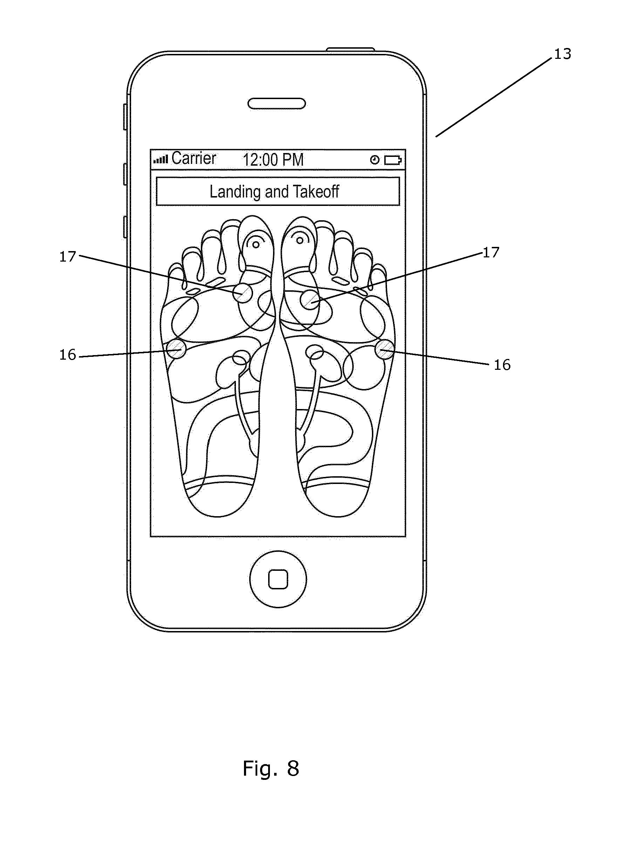

Fig. 8 is also a front view of a cellular phone 13, having an app installed thereon, which allows the cellular phone 13 to be used in performing a method according to an embodiment of the invention, essentially as described above with reference to Fig. 7.

In Fig. 8 feedback for the individual is displayed on a screen of the cellular phone 13, in the form of marks illustrated on the feet of the individual, representing the parts of the feet which are most affected during landing 16 and take-off 17, respectively. It can be seen from Fig. 8 that the individual tends to land on an outer part of the foot, and take off at an inner and front part of the foot. This generally represents a desired running style. A specific and concrete feedback to the individual, based on this information, could, e.g., be "you are doing good - keep it up".

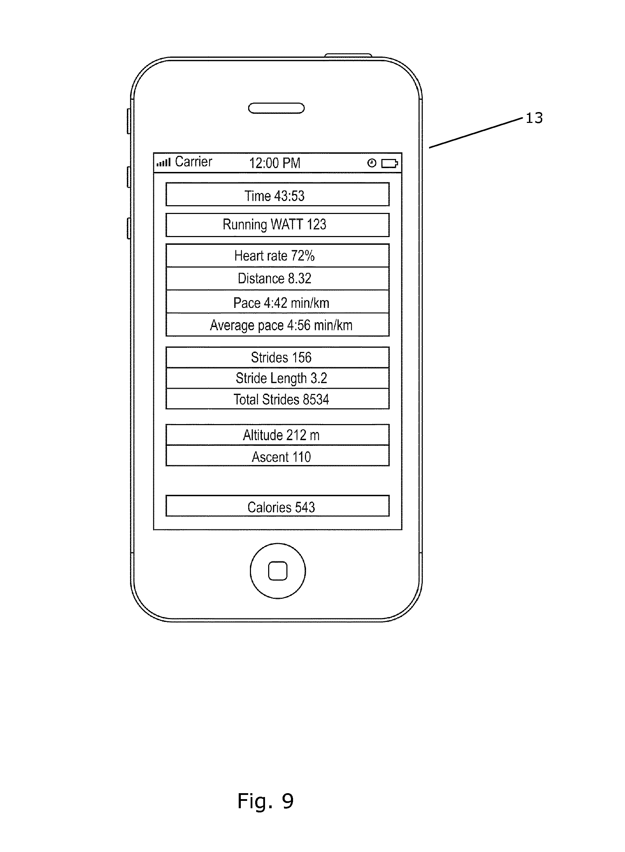

Fig. 9 is also a front view of a cellular phone 13, having an app installed thereon, which allows the cellular phone 13 to be used in performing a method according to an embodiment of the invention, essentially as described above with reference to Fig. 7.

In Fig. 9 feedback for the individual is displayed on a screen of the cellular phone 13, in the form of a list of parameter values, each providing information regarding a parameter which is relevant with respect to the running style and/or the performance of the individual, when the individual is running.

'Time' represents the time spent on the current training pass.

'Running Watt' represents the instantaneous power spent by the individual while propelling the body of the individual across the ground.

'Heart rate' represents the current heart rate of the individual.

'Distance' represents the distance covered by the current training pass.

'Pace' represents the instantaneous running velocity of the individual.

'Average pace' represents the average velocity of the individual, during the current training pass.

'Strides' represents the stride frequency.

'Stride length' represents the average length of the strides during a short time period, such as 10-20 seconds.

'Total strides' represents the total number of strides during the current training pass.

'Altitude' represents the altitude, where the individual is positioned.

'Ascent' represents the total climb performed by the individual during the current training pass.

'Calories' represents the amount of energy spent during the current training pass.

Some of the information listed above may be derived from the data provided by the accelerometer(s), and some of the information may be provided by the cellular phone 13. For instance, the cellular phone 13 may provide information regarding time, distance covered, pace, average pace, altitude and ascent.

Selecting one of the parameters by touching the corresponding area of the touch screen will result in more detailed information regarding the parameter to be displayed on the screen of the cellular phone 13.

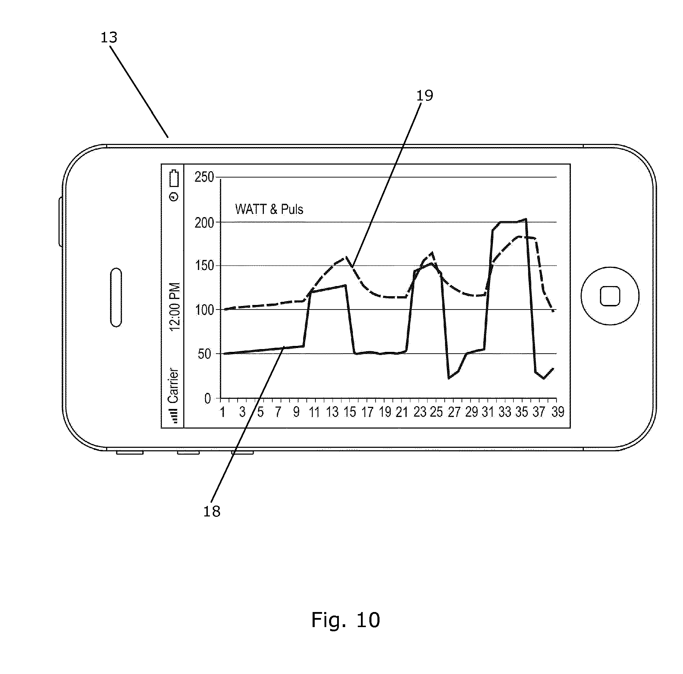

Fig. 10 is also a front view of a cellular phone 13, having an app installed thereon, which allows the cellular phone 13 to be used in performing a method according to an embodiment of the invention, essentially as described above with reference to Fig. 7.

In Fig. 10 feedback for the individual is displayed on a screen of the cellular phone 13, in the form of two graphs illustrating power 18 spent by the individual and pulse 19 of the individual, as a function of time. The image shown in Fig. 10 represents a complete training pass with a duration of approximately 40 minutes. The illustrated training pass includes interval training. It can be seen that the power is significantly increased after approximately 10 minutes, and the increased power level is maintained for approximately 5 minutes. Then the power is reduced to a basis level, which is maintained for approximately 8 minutes. Then the power is once again increased to an even higher level, and this higher level is maintained for approximately 4 minutes, where the power level is decreased again. It can be seen that the power is allowed to temporarily drop to a level below the basis level. Finally, after approximately 31 minutes, the power is increased to an even higher level, and this very high level is maintained almost to the end of the training pass.

It can be seen that the pulse follows the power, in the sense that an increase in the power results in a gradual increase in the pulse, and a decrease in the power results in a gradual decrease in the pulse.

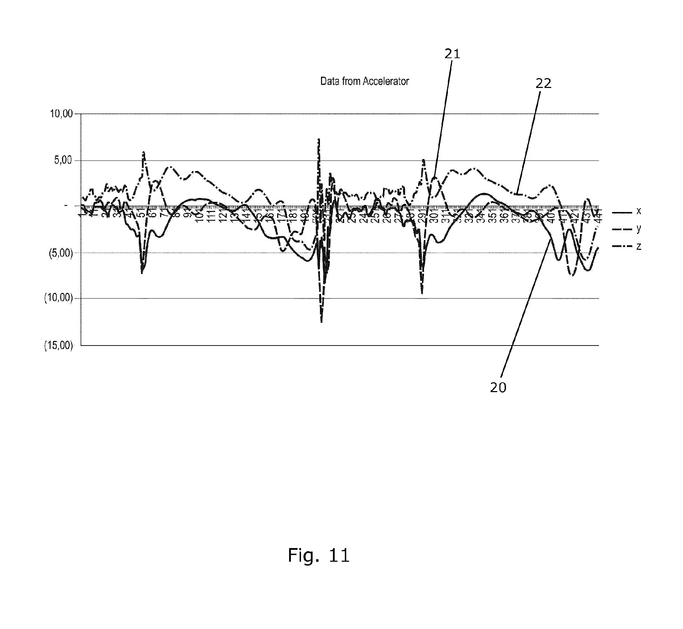

Fig. 11 is a graph illustrating an output signal from a three-dimensional accelerometer arranged on the foot of an individual, who is running, as a function of time. Graph 20 shows accelerations of the foot along an x-direction, graph 21 shows accelerations of the foot along a y-direction, and graph 22 shows accelerations of the foot along a z-direction.

Each of the large variations in the graphs 20, 21, 22 represents an impact between the foot carrying the three-dimensional accelerometer and the ground. Thus, the graph of Fig. 11 represents three impacts between the foot and the ground.

The data corresponding to the graph of Fig. 11 is supplied to a portable electronic processing device, e.g. in the form of a cellular phone, where the data is processed, as described above, in order to obtain a movement pattern of the foot, and generate a feedback to the individual.

## Claims

1. A method for optimizing running performance for an individual, the method comprising the steps of:
- monitoring movements of a foot of the individual during running, using one or more accelerometers,
- transmitting data obtained during the monitoring step from the one or more accelerometers to a portable electronic processing device,
- the portable electronic processing device deriving a three-dimensional movement pattern of the foot of the individual, based on the data obtained during the monitoring step,
- the portable electronic processing device comparing the derived movement pattern of the foot of the individual to an optimal movement pattern, and
- the portable electronic processing device providing feedback to the individual, based on the comparing step, and in order to adjust the movement pattern of the foot of the individual, thereby improving a running performance.

2. A method according to claim 1, wherein the steps of monitoring movements, transmitting data, deriving a movement pattern, comparing the derived movement pattern to an optimal movement pattern, and providing feedback are performed in real time.

3. A method according to claim 1 or 2, wherein the step of providing feedback comprises providing audible feedback.

4. A method according to any of the preceding claims, wherein the portable electronic processing device is a cellular phone.

5. A method according to any of the preceding claims, further comprising the steps of:
- monitoring movements of the chest of the individual, using one or more accelerometers arranged at the chest of the individual,
- transmitting data obtained during the monitoring step from the one or more accelerometers to the portable electronic processing device, and
- the portable electronic processing device calculating an instantaneous power spent to propel the individual's body, based on the transmitted data,
wherein the step of the portable electronic processing device providing feedback to the individual is further based on the calculated instantaneous power.

6. A method according to claim 5, further comprising the steps of:
- calculating an average power spent to propel the individual's body over a predefined time interval, and
- deriving a running efficiency indicator, based on the calculated average power, and on a running velocity of the individual,
wherein the step of the portable electronic processing device providing feedback to the individual is further based on the derived running efficiency indicator.

7. A method according to any of the preceding claims, wherein the step of deriving a movement pattern of the foot comprises deriving points of impact and/or duration of impact on the foot between the foot and the ground during an impact phase of a stride.

8. A method according to any of the preceding claims, wherein the step of deriving a movement pattern of the foot comprises deriving vertical and horizontal position of the foot during a swing phase of a stride.

9. A method according to any of the preceding claims, wherein the step of deriving a movement pattern of the foot comprises deriving a pose angle of a torso of the individual.

10. A method according to any of the preceding claims, further comprising the step of the portable electronic processing device transmitting processed data to a central database.

11. A method according to any of the preceding claims, wherein the step of comparing comprises comparing the derived movement pattern to a movement pattern derived previously during the same training pass, thereby obtaining a measure for a change in the movement pattern as a function of time, and wherein the step of providing feedback comprises generating a warning when changes in the movement pattern exceeds a predefined threshold.
